# EUROPEAN PATENT SPECIFICATION

(11) **EP 4 609 492 B1**
(45) Date of publication and mention of the grant of the patent: **02.12.2026**
(21) Application number: 22809141.9
(22) Date of filing: 26.10.2022
(51) Int. Cl.: H02K 7/075, H02K 35/02, H02K 47/00, H02K 7/18

(54) **ELECTRIC MOTOR (II)**
ELEKTROMOTOR
MOTEUR ÉLECTRIQUE

(43) Date of publication of application: 03.09.2025
(73) Proprietor: Tjon-A-Loi, Milton Kenneth Maria, 3162 PL. Rhoon (NL)
(72) Inventor: Tjon-A-Loi, Milton Kenneth Maria, 3162 PL. Rhoon (NL)
(74) Representative: Fabry, Bernd
(86) International application number: PCT/EP2022/079981
(87) International publication number: WO 2024/088534

(56) References cited:
- EP-B1- 3 382 868
- US-A- 5 179 306
- US-A1- 2014 306 532
- US-B2- 9 716 424

## Description

### AREA OF THE INVENTION

The present invention belongs to the area of electrical engineering and relates to an improved electric motor with reduced energy loss, high energy recovery and particular smooth running.

### TECHNOLOGICAL BACKGROUND

The rotary motion of an electric motor is based on the attractive and repulsive forces that several magnetic fields exert on each other (Lorentz force). In the usual electric motor, there is a fixed outer part and an inner part rotating inside it. Either one of them has permanent magnets and the other electric coils, or both components have coils. Each current-carrying coil generates a magnetic field whose orientation (north pole/south pole) depends on the direction of the current - if the current flows through the coil in the opposite direction, the magnetic field is also reversed. By reversing the polarity of the coils several times during one revolution, a continuous rotation of the inner part is achieved.

Since the fundamental developments of ØERSTEDT and FARADAY in 1820/21 and the first dynamo developed by SIEMENS, the electric motor has become one of the hallmarks of the second industrial revolution. If one enters this term in the relevant databases today, the hit list shows well over 300,000 patents that have been applied for and granted on this subject.

Under the heading of "e-mobility", the electric motor is now attracting additional commercial interest. The search is on for highly efficient motors that are capable of running motors such as those used in motor vehicles for as long as possible with a limited amount of battery power. A critical point is the recovery of the energy required for primary induction in the rotor-stator combination during operation, since state-of-the-art motors do not yet offer a satisfactory solution for this.

### RELEVANT STATE OF THE ART

US 2014 0306532 A1 (LLOYD GRAY) discloses a generator characterized by a radial arrangement of five cylinders around a common crankshaft. Mechanical input power from an engine is applied to the crankshaft to convert it to electrical output power. Each of the five radial cylinders contains four sets of equally spaced shuttle magnets arranged head to tail and separated by spacers and insulators. The shuttle magnets are mounted as an assembly on a rod that is driven independently of the crankshaft, allowing each of the five rods to reciprocate in different phases within four matched sets of equally spaced pickup coils. AC currents from each of the twenty total pickup coils are individually rectified, filtered, and regulated to charge banks of batteries or ultra-capacitors. Solid-state inverters can be connected to the batteries or ultra-capacitors to generate AC power, for example.
EP 3382868 B1 (VARLI) proposes an electric motor with which it is possible to at least partially recover the primary electric power of 500 to 2,000 watts and typically of about 1,200 watts required for primary induction of the magnetic field in the rotor via magnetic fields induced secondarily in the cylinders.

### PROBLEM TO BE SOLVED

The motor as disclosed in EP 3382868 B1 is capable of producing a surprising high amount of electricity and - in theory - can be operated at a speed of up to 2,000 rpm. In practice, however, it was found that this is not possible. As a matter of fact, at higher rotations per minute - which are required to generate the expected current - the whole system starts to vibrate and after a short time develops a serious tendency for destruction. Also, the noise of the motor is not acceptable for any technical realization. To avoid said disadvantages, it is necessary, to operate the motor at low speed, although this has the consequence that the amount of electricity theoretically achievable with this motor cannot be reached.

Therefore, the object of the present invention has been modifying the electric motor of EP 3382868 B1 to overcome the disadvantages as described above.

### DESCRIPTION OF THE INVENTION

In a first embodiment the present invention refers to an electric motor for installation in a motor vehicle for tapping electrical energy, storing it or feeding it back to an electric drive, comprising or consisting of
(i) a drive (C) containing
   (i-a) a fixed magnetic stator element;
   (i-b) a rotor element movably disposed in the stator element and consisting of an iron core and a rotor coil wound there around; and
   (i-c) a drive shaft (B) which is rotatable mounted on which the rotor element (R) is arranged;
   (i-d) a power supply with sliding contacts for driving the rotor element; and optionally
   (i-e) a pole changer;
(ii) at least two cylinders (Z), each containing therein
   (ii-a) at least one magnetic core (M1, M2, M3);
   (ii-b) at least one cylinder coil (X1, X2);
   (ii-c) a single connecting rod (P) for each cylinder (Z);
   (ii-d) a connecting rod bearing (PB);
(iii) a housing (G) for containing the drive (C) and the cylinders (Z),
wherein
(a1) the at least one cylinder coil (X1, X2) being fixedly arranged in the cylinder (Z);
(a2) the magnet cores (M1, M2, M3) are connected to the drive shaft (B) via the connecting rods (P);
(a3) the connecting rods are arranged in two opposite groups and these two groups are respectively connected to the drive shaft (B) so as to form a "V" shape; wherein
(a4) the rotary motion of the drive shaft (B) is converted via the connecting rods into a translational motion of the connecting rods (P) and thus of the magnetic cores (M1, M2, M3) in the individual cylinders (Z), and
(a5) the magnetic cores (M1, M2, M3) thereby regularly pass through the cylinder coils (X1, X2) arranged in the cylinder (Z) and thereby induce a magnetic field and generate electrical energy
wherein the magnetic cores (M1, M2, M3)
(b1) are arranged on single connecting rods (P) and are movable within the respective cylinders (Z); and
(b2) are separated from each other on each single connecting rod by spacers (S1, S2, S3), said spacers showing a truncated cone shape.

Further on, in a preferred embodiment each assembly consisting of one magnetic core (M) and its related spacer (S) is fixed on their related connecting rod (P) by locking rings (R).

Surprisingly it had been found that inserting said truncated cone shaped spacers between the magnetic cores, and preferably fixing each assembly consisting of one magnetic core and its related spacer on the connecting rods by locking rings, solves the problem underlying the present invention. The whole motor is stabilized, runs smoother and almost noiseless, which allows to operate the motor with significantly higher speed, and thus producing more energy.

### Motor principle

The electric motor according to the invention is driven by magnetic fields induced by current flow in rotating conductor coils, the mutual attractive and repulsive forces of which are converted into the movement of a drive shaft relative to a permanently installed permanent magnet. Speeds of typically 500 to 1,800 or even up to about 2,000 rpm are achieved.

Specifically, the drive consists of a permanent magnet, the stator, which generates a constant magnetic field, and the moving part, referred to as the rotor or armature, which moves between the two poles of the stator. The rotor is held by a drive shaft, for example a crankshaft, which is rotatably mounted. A coil is wound around the rotor, for example an iron core, through which electric current flows. The power is supplied via sliding contacts, so-called "brushes", which are attached to the rotor. If the drive is by direct current, a pole inverter (commutator) is provided as a further element, which reverses the direction of the current in each case, so that the rotor does not stop as soon as opposite poles of the rotor and stator are opposite each other.

When current flows through the coil, the rotor core is magnetized. The repulsion of opposite poles causes the rotor to rotate in the stator housing, which is made continuous by the fact that the direction of the current and thus the polarity of the rotor magnet automatically changes periodically when alternating current is used, or is changed in a controlled manner by the pole changer when direct current is used. The rotary motion is transmitted to the drive shaft and thus electrical energy is converted into mechanical energy.

### Principle of energy recovery

In terms of the present invention, the drive shaft is used to drive two or more cylinders. In contrast to classical electric motors, no rotational energy, but translational energy is generated and used here.

The cylinders are characterized in that they contain at least one, but preferably two or three magnetic cores arranged on connecting rods which are again connected to the drive shaft. Specifically, the rotary motion of the drive shaft is converted via the connecting rods into a translational motion of the connecting rods and thus of the magnets in the individual cylinders.

While the magnets are thus movable via the connecting rods in the cylinders and are moved back and forth along the cylinder axes by the drive shaft, the cylinders further contain at least one, but preferably also two or three coils, which are fixedly connected to the housing of the cylinder and are preferably arranged therein in a concentric manner. As the magnets move along the cylinder axis, they regularly pass through the coil, inducing a magnetic field in each case, i.e., generating electrical energy that can be tapped, stored or fed back to the electric drive. In this way, it is possible to recover at least 50% and even up to 70% of the energy required for the induction of the magnetic field in the rotor. Preferably, the device according to the invention has two, four, six or eight cylinders, each of which is usually arranged in pairs opposite one another and is driven by the drive shaft via the connecting rods. In this way, the cylinders can then also be clocked.

In principle, the arrangement also works with one magnet traveling through the field of a coil, but it has proved advantageous in terms of higher energy recovery to use two or preferably 3 magnets. These should be equal in diameter and matched to the cross-section of the cylinder, but their lengths may be the same or different. Typical diameters are from 1 to about 10 cm and preferably from about 2 to about 4 cm. Typical lengths are from about 2 to about 20 cm and preferably from about 4 to about 8 cm. As shown in the figure, it is recommended for stability reasons to make the two outer magnets somewhat shorter than the middle one. Particularly preferred are so-called neodymium magnets, i.e., permanent magnets made of an alloy of neodymium, iron and boron with the composition Nd₂Fe₁₄B.

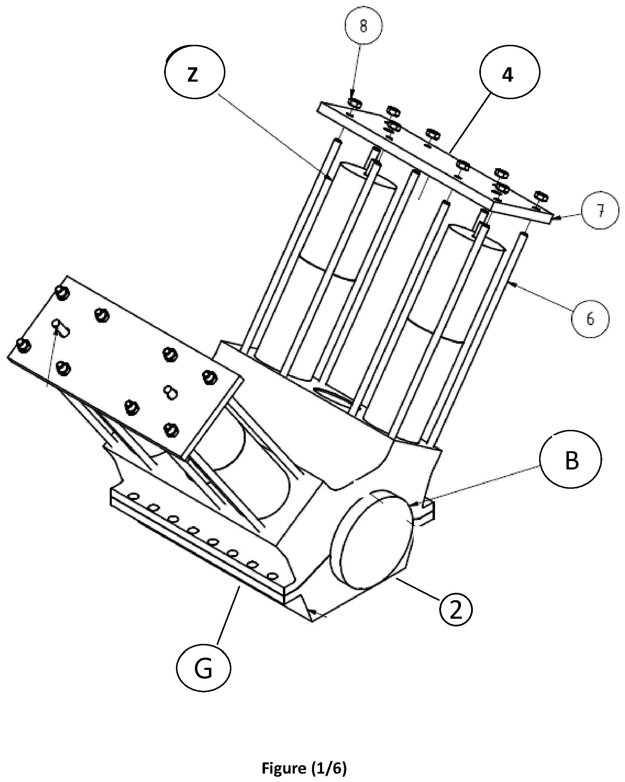

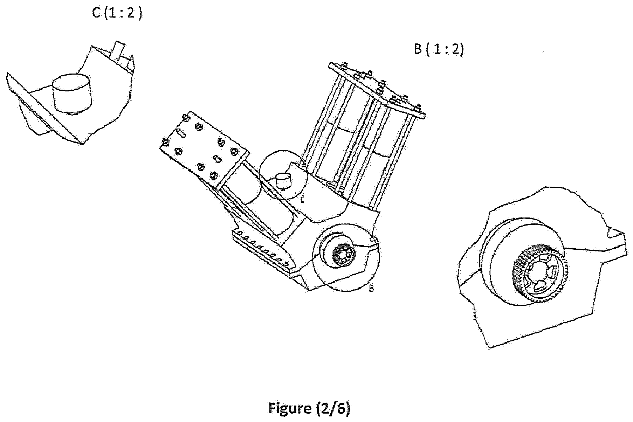

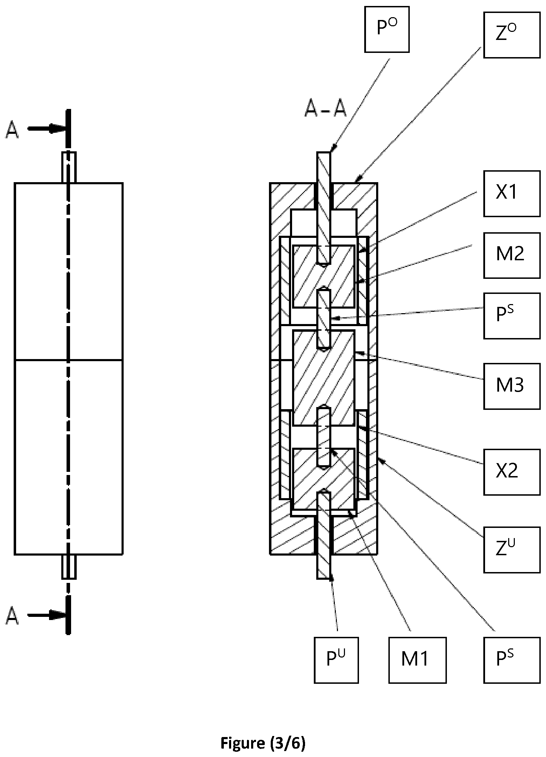

The invention will be explained in more detail below by reference to **Figures 1 through 6****,** without being limited thereto. The meaning of the reference signs is given below:
- (1): Electric motor detail drawing
- (2): Electric motor with detached views of drive and drive shaft
- (3): Cylinder
- (4): Housing - top
- (5): Housing - bottom
- (6): Aluminum round bar - top
- (7): Neodymium magnet 1
- (8): Coil
- (9): Aluminum round bar - connection
- (10): Neodymium magnet 2
- (11): Aluminum round bar - bottom
- (12): Drive shaft
- (13): Gear wheel of the drive shaft

**Figure 1** shows a view of an electric motor with a total of 4 cylinders arranged opposite each other. The reference signs used there have the following meaning:
   - (G): Housing
   - (2): Motor sump (metal)
   - (3): Drive shaft
   - (4): Upper part
   - (Z): Cylinder
   - (6): Round bars for side support
   - (7): Cover
   - (8): Screws
   The housing (G) consists of a lower part, the "trough" (2), and an upper part (4) containing the cylinders (Z). These are arranged in pairs and are fixed in position by 4 round rods (6) each and a cover (7). The round rods, which serve as side supports, are screwed to the cover through threaded holes (8). Between the two housing parts is the bearing of the drive shaft (3).
**Figure 2** shows a second, more detailed view of the electric motor. Here, the drive (C) can be seen in detail, i.e., the rotor-stator combination, which is connected to the drive shaft (C).
**Figure 3** is not according to the invention, but shows a section through a cylinder and specifically in the state of maximum deflection of the magnets of the original electric motor according to EP 3382868 B1**.** The reference drawings used there have the following meaning:
   - (ZO): Cylinder housing, upper part
   - (ZU): Cylinder housing, lower part
   - (PO): Connecting rod, upper part
   - (M1, M2): Magnetic cores 1 and 2
   - (X1, X2): Coils
   - (PS): Connecting rod, connecting piece
   - (M3): Magnetic core 3
   - (PU): Connecting rod, lower part
   The cylinder housing, which is usually made of plastic, has an opening at the upper and lower end through which the connecting rod is guided. As one can see, the three magnets are each connected by separate connecting rod elements (PO, PS, PU).

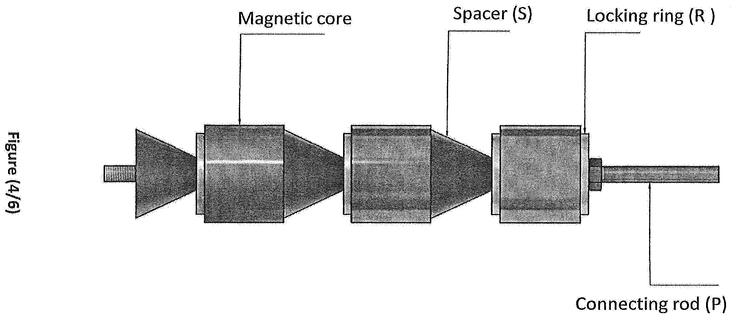

**Figure 4** is again according to the invention. The assembly of the magnetic cores is the same, as well as these cores are moving through the cylinders to induce a magnetic field. However, the cores are assembled on a single connecting rod (P) and separated from each other by a spacer (S), while each assembly consisting of a magnet core and a spacer is fixed on the connecting rod by locking rings (R).

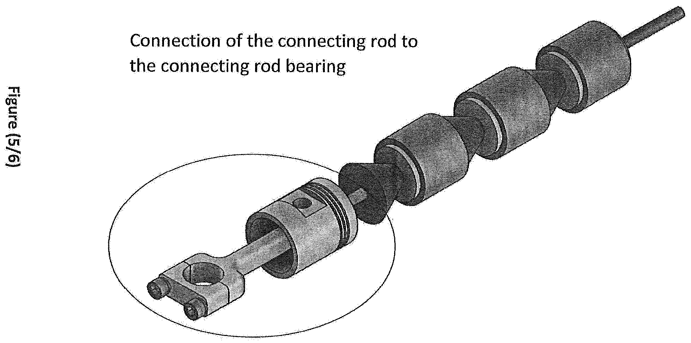

**Figure 5** is similar to Figure 4, but also shows the connection between the connecting rod (P) and the connecting rod bearing (PB).

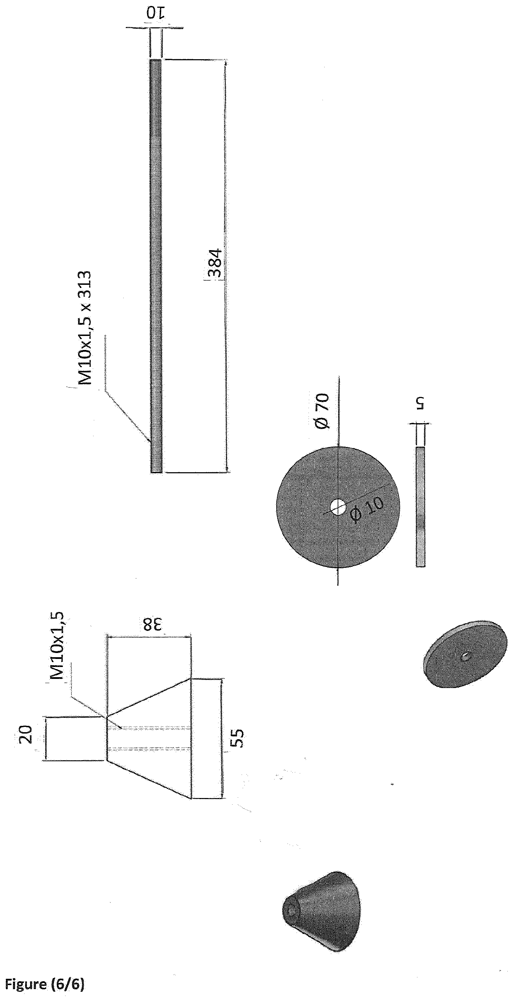

**Figure 6** shows details of the spacers, the locking rings and the connecting rod.

In a further embodiment of the invention, the electric motor can also be connected in series to a generator, which then provides outputs of up to 5,000 watts/hour. In addition, typical applications for the new motor are motor vehicles, trucks, buses, ships, aircraft and the like.

## Claims

1. Electric motor for installation in a motor vehicle for tapping electrical energy, storing it or feeding it back to an electric drive, comprising or consisting of
(i) a drive (C) containing
(i-a) a fixed magnetic stator element;
(i-b) a rotor element movably disposed in the stator element and consisting of an iron core and a rotor coil wound there around; and
(i-c) a drive shaft (B) which is rotatable mounted on which the rotor element (R) is arranged;
(i-d) a power supply with sliding contacts for driving the rotor element; and optionally
(i-e) a pole changer;
(ii) at least two cylinders (Z), each containing therein
(ii-a) at least one magnetic core (M1, M2, M3);
(ii-b) at least one cylinder coil (X1, X2);
(ii-c) a single connecting rod (P) for each cylinder (Z);
(ii-d) a connecting rod bearing (PB);
(iii) a housing (G) for containing the drive (C) and the cylinders (Z),
wherein
(a1) the at least one cylinder coil (X1, X2) being fixedly arranged in the cylinder (Z);
(a2) the magnet cores (M1, M2, M3) are connected to the drive shaft (B) via the connecting rods (P);
(a3) the connecting rods are arranged in two opposite groups and these two groups are respectively connected to the drive shaft (B) so as to form a "V" shape; wherein
(a4) the rotary motion of the drive shaft (B) is converted via the connecting rods into a translational motion of the connecting rods (P) and thus of the magnetic cores (M1, M2, M3) in the individual cylinders (Z), and
(a5) the magnetic cores (M1, M2, M3) thereby regularly pass through the cylinder coils (X1, X2) arranged in the cylinder (Z) and thereby induce a magnetic field and generate electrical energy
wherein the magnetic cores (M1, M2, M3)
(b1) are arranged on single connecting rods (P) and are movable within the respective cylinders (Z); and
(b2) are separated from each other on each single connecting rod by spacers (S1, S2, S3), said spacers showing a truncated cone shape.

2. The electric motor of Claim 1, wherein each assembly consisting of one magnetic core (M) and its related spacer (S) is fixed on each single connecting rod (P) by locking rings (R).

3. The electric motor of Claim 1, having two, four, six or eight cylinders (Z), each of which is arranged in pairs opposite one another and is driven by the drive shaft (B) via the connecting rods (P).

4. The electric motor of Claim 1, operated with a primary power of 500 to 2,000 watts.

5. The electric motor of Claim 1, operated at a speed of up to 2,000 rpm.

6. The electric motor of Claim 1, wherein the cylinders (Z) consist of aluminum.

7. The electric motor of Claim 1, wherein the cylinders (Z) contain at least two, preferably three, magnetic cores (M1, M2, M3).

8. The electric motor of Claim 1, wherein the magnetic cores (M1, M2, M3) have equal diameters and equal or different lengths.

9. The electric motor of Claim 1, wherein the magnetic cores (M1, M2, M3) consist of neodymium alloy.

10. The electric motor of Claim 1, wherein the cylinders (Z) comprise at least two cylindrical coils (X1, X2).

11. Power generator comprising at least one electric motor according to Claim 1 and a generator connected in series therewith.

## Patentansprüche

1. Elektromotor zum Einbau in ein Kraftfahrzeug zur Entnahme, Speicherung oder Rückspeisung elektrischer Energie an einen elektrischen Antrieb, bestehend aus oder umfassend:
(i) einen Antrieb (C) mit:
(i-a) einem feststehenden magnetischen Statorelement;
(i-b) ein im Statorelement beweglich angeordnetes Rotorelement, bestehend aus einem Eisenkern und einer darum gewickelten Rotorspule; und
(i-c) eine drehbar gelagerte Antriebswelle (B), auf der das Rotorelement (R) angeordnet ist;
(i-d) eine Stromversorgung mit Schleifkontakten zum Antrieb des Rotorelements; und optional
(i-e) einen Polwechsler;
(ii) mindestens zwei Zylinder (Z), die jeweils enthalten:
(ii-a) mindestens einen Magnetkern (M1, M2, M3);
(ii-b) mindestens eine Zylinderspule (X1, X2);
(ii-c) eine einzelne Pleuelstange (P) für jeden Zylinder (Z);
(ii-d) ein Pleuellager (PB);
(iii) ein Gehäuse (G) zur Aufnahme des Antriebs (C) und der Zylinder (Z),
wobei
(a1) die mindestens eine Zylinderspule (X1, X2) fest im Zylinder (Z) angeordnet ist;
(a2) die Magnetkerne (M1, M2, M3) über die Pleuelstangen (P) mit der Antriebswelle (B) verbunden sind;
(a3) die Pleuelstangen in zwei gegenüberliegenden Gruppen angeordnet sind und diese beiden Gruppen jeweils so mit der Antriebswelle (B) verbunden sind, dass sie eine "V"-Form bilden; wobei
(a4) die Drehbewegung der Antriebswelle (B) über die Verbindungsstangen in eine Translationsbewegung der Verbindungsstangen (P) und damit der Magnetkerne (M1, M2, M3) in den einzelnen Zylindern (Z) umgewandelt wird, und
(a5) die Magnetkerne (M1, M2, M3) dadurch regelmäßig die im Zylinder (Z) angeordneten Zylinderspulen (X1, X2) durchlaufen und dadurch ein Magnetfeld induzieren und elektrische Energie erzeugen
wobei die Magnetkerne (M1, M2, M3)
(b1) auf einzelnen Pleuelstangen (P) angeordnet und innerhalb der jeweiligen Zylinder (Z) beweglich sind; und
(b2) auf jeder einzelnen Pleuelstange durch Abstandshalter (S1, S2, S3) voneinander getrennt sind, wobei die Abstandshalter eine Kegelstumpfform aufweisen.

2. Elektromotor nach Anspruch 1, wobei jede Baugruppe, bestehend aus einem Magnetkern (M) und dem dazugehörigen Abstandhalter (S), an jeder einzelnen Pleuelstange (P) durch Sicherungsringe (R) befestigt ist.

3. Elektromotor nach Anspruch 1, mit zwei, vier, sechs oder acht Zylindern (Z), von denen jeder paarweise einander gegenüberliegend angeordnet ist und über die Pleuelstangen (P) von der Antriebswelle (B) angetrieben wird.

4. Elektromotor nach Anspruch 1, der mit einer Primärleistung von 500 bis 2.000 Watt betrieben wird.

5. Elektromotor nach Anspruch 1, der mit einer Drehzahl von bis zu 2.000 U/min betrieben wird.

6. Elektromotor nach Anspruch 1, wobei die Zylinder (Z) aus Aluminium bestehen.

7. Elektromotor nach Anspruch 1, wobei die Zylinder (Z) mindestens zwei, vorzugsweise drei Magnetkerne (M1, M2, M3) enthalten.

8. Elektromotor nach Anspruch 1, wobei die Magnetkerne (M1, M2, M3) gleiche Durchmesser und gleiche oder unterschiedliche Längen aufweisen.

9. Elektromotor nach Anspruch 1, wobei die Magnetkerne (M1, M2, M3) aus einer Neodym-Legierung bestehen.

10. Elektromotor nach Anspruch 1, wobei die Zylinder (Z) mindestens zwei zylindrische Spulen (X1, X2) umfassen.

11. Stromerzeuger, umfassend mindestens einen Elektromotor nach Anspruch 1 und einen damit in Reihe geschalteten Generator.

## Revendications

1. Moteur électrique destiné à être monté dans un véhicule automobile pour capter de l'énergie électrique, la stocker ou la réinjecter dans un système de propulsion électrique, comprenant ou consistant en :
(i) un ensemble d'entraînement (C) comprenant :
(i-a) un élément statorique magnétique fixe ;
(i-b) un élément de rotor disposé de manière mobile dans l'élément de stator et constitué d'un noyau de fer et d'une bobine de rotor enroulée autour de celui-ci ; et
(i-c) un arbre d'entraînement (B) monté de manière rotative, sur lequel est disposé l'élément de rotor (R) ;
(i-d) une alimentation électrique à contacts glissants pour entraîner l'élément rotor ; et, en option,
(i-e) un commutateur de pôles ;
(ii) au moins deux cylindres (Z), chacun contenant
(ii-a) au moins un noyau magnétique (M1, M2, M3) ;
(ii-b) au moins une bobine de cylindre (X1, X2) ;
(ii-c) une seule bielle (P) pour chaque cylindre (Z) ;
(ii-d) un palier de bielle (PB) ;
(iii) un boîtier (G) destiné à contenir l'entraînement (C) et les cylindres (Z),
dans lequel
(a1) la au moins une bobine de cylindre (X1, X2) est disposée de manière fixe dans le cylindre (Z) ;
(a2) les noyaux magnétiques (M1, M2, M3) sont reliés à l'arbre d'entraînement (B) par l'intermédiaire des bielles (P) ;
(a3) les bielles sont disposées en deux groupes opposés et ces deux groupes sont respectivement reliés à l'arbre d'entraînement (B) de manière à former un « V » ; dans lequel
(a4) le mouvement de rotation de l'arbre d'entraînement (B) est converti, par l'intermédiaire des bielles, en un mouvement de translation des bielles (P) et donc des noyaux magnétiques (M1, M2, M3) dans les cylindres individuels (Z), et
(a5) les noyaux magnétiques (M1, M2, M3) traversent ainsi régulièrement les bobines de cylindre (X1, X2) disposées dans le cylindre (Z) et induisent ainsi un champ magnétique et génèrent de l'énergie électrique
dans lequel les noyaux magnétiques (M1, M2, M3)
(b1) sont disposés sur des bielles individuelles (P) et sont mobiles à l'intérieur des cylindres respectifs (Z) ; et
(b2) sont séparés les uns des autres sur chaque bielle individuelle par des entretoises (S1, S2, S3), lesdites entretoises présentant une forme de cône tronqué.

2. Moteur électrique selon la revendication 1, dans lequel chaque ensemble constitué d'un noyau magnétique (M) et de son entretoise associée (S) est fixé sur chaque bielle (P) par des bagues de blocage (R).

3. Moteur électrique selon la revendication 1, comportant deux, quatre, six ou huit cylindres (Z), dont chacun est disposé par paires opposées et est entraîné par l'arbre d'entraînement (B) via les bielles (P).

4. Moteur électrique selon la revendication 1, fonctionnant avec une puissance primaire de 500 à 2 000 watts.

5. Moteur électrique selon la revendication 1, fonctionnant à une vitesse allant jusqu'à 2 000 tr/min.

6. Moteur électrique selon la revendication 1, dans lequel les cylindres (Z) sont en aluminium.

7. Moteur électrique selon la revendication 1, dans lequel les cylindres (Z) contiennent au moins deux, de préférence trois, noyaux magnétiques (M1, M2, M3).

8. Moteur électrique selon la revendication 1, dans lequel les noyaux magnétiques (M1, M2, M3) ont des diamètres égaux et des longueurs égales ou différentes.

9. Moteur électrique selon la revendication 1, dans lequel les noyaux magnétiques (M1, M2, M3) sont constitués d'un alliage de néodyme.

10. Moteur électrique selon la revendication 1, dans lequel les cylindres (Z) comprennent au moins deux bobines cylindriques (X1, X2).

11. Générateur d'énergie comprenant au moins un moteur électrique selon la revendication 1 et un générateur connecté en série avec celui-ci.
